# EUROPEAN PATENT APPLICATION

(11) **EP 4 755 237 A1**
(43) Date of publication of application: **10.06.2026**
(21) Application number: 24852146.0
(22) Date of filing: 26.07.2024
(51) Int. Cl.: A24F 40/95, A24F 40/46, A24F 40/40, H02J 7/00, A24F 40/42

(54) **AEROSOL-GENERATING DEVICE**

(30) Priority: 04.08.2023 KR 20230102238; 29.12.2023 KR 20230197457
(71) Applicant: KT&G Corporation, Daedeok-gu Daejeon 34337 (KR)
(72) Inventor: JANG, Chul Ho, Bucheon-si, Gyeonggi-do 14725 (KR); KIM, Jae Hyuk, Seoul 06352 (KR); PARK, Sang Cheol, Suwon-si, Gyeonggi-do 16469 (KR); SEO, Jang Won, Daejeon 34023 (KR); WOO, Young Min, Hwaseong-si, Gyeonggi-do 18391 (KR); LEE, Won Kyeong, Guri-si, Gyeonggi-do 11920 (KR); JUNG, Jin Chul, Daejeon 34079 (KR); HAN, Dae Nam, Seoul 06331 (KR)
(74) Representative: Ter Meer Steinmeister & Partner
(86) International application number: PCT/KR2024/010936
(87) International publication number: WO 2025/033790

(57) **Abstract**

An aerosol-generating device according to an embodiment includes a main body including a first connection terminal on a bottom surface thereof, and a battery removably coupled to the main body and including a first battery terminal connected to the first connection terminal on a first surface facing the bottom surface, wherein the battery has a cross-sectional shape matching a cross-sectional shape of the main body, extends in a longitudinal direction of the main body, and forms an outer circumferential surface of the aerosol-generating device together with the main body.

## Description

### Technical Field

The present disclosure relates to an aerosol-generating device. More particularly, the present disclosure relates to an aerosol-generating device including a removable battery that forms an exterior of the aerosol-generating device together with a main body.

### Background Art

Recently, there has been an increasing demand for smoking methods that replace general cigarettes. For example, there is an increasing demand for a method of generating aerosol by heating an aerosol generating article in a cigarette, rather than a method of generating aerosol by burning a cigarette. Accordingly, research on a heating-type cigarette or a heating-type aerosol-generating device has been actively conducted.

An aerosol-generating device may receive power from a battery for an overall operation of the device and heating a heater. Recently, countries have shown a tendency to demand that electronic devices including batteries have eco-friendliness and stability throughout the entire life cycle, from battery production to recycling, to improve the global environment.

### Disclosure of Invention

### Technical Problem

An objective of the present disclosure is to provide an aerosol-generating device that may include batteries having various capacities without impairing a user's grip.

However, objectives to be achieved by the embodiments are not limited thereto, and other unmentioned objectives will be apparent to one of ordinary skill in the art to which the embodiments pertain from the present specification and the attached drawings.

### Solution to Problem

An aerosol-generating device according to an embodiment includes a main body including a first connection terminal on a bottom surface thereof, and a battery removably coupled to the main body and including a first battery terminal connected to the first connection terminal on a first surface facing the bottom surface, wherein the battery has a cross-sectional shape matching a cross-sectional shape of the main body, extends in a longitudinal direction of the main body, and forms an outer circumferential surface of the aerosol-generating device together with the main body.

### Advantageous Effects of Invention

Because an aerosol-generating device according to various embodiments of the present disclosure includes a removable battery that has the same cross-sectional shape as that of a main body and extends in a longitudinal direction of the main body, batteries having various capacities without hindering a user's grip may be provided.

Effects of the embodiments are not limited to the above-mentioned effects, and other effects not mentioned will be clearly understood by one of ordinary skill in the art to which the embodiments pertain from the present specification and the attached drawings.

### Brief Description of Drawings

FIG. 1 is a block diagram illustrating a hardware configuration of an aerosol-generating device, according to an embodiment.
FIGS. 2A to 2E are diagrams illustrating various implementations of embodiments of the aerosol-generating device of FIG. 1.
FIGS. 3A to 3D are views for describing an aerosol-generating device, of an embodiment.
FIGS. 4A to 4C are views for describing an aerosol-generating device, of another embodiment.
FIGS. 5A to 5D are views for describing an aerosol-generating device, of another embodiment.
FIG. 6 is a diagram for describing operations of a plurality of batteries and a power management unit.
FIG. 7 is a diagram for describing a power management unit, according to an embodiment of the present disclosure.
FIGS. 8 and 9 are diagrams for describing an operation of a power management unit according to an embodiment where two batteries are both connected to a main body and a difference between voltages of the two batteries is greater than or equal to a preset threshold value.
FIGS. 10A and 10B are diagrams for describing an operation of a power management unit according to an embodiment where two batteries are both connected to a main body and a difference between voltages of the two batteries is less than a preset threshold value.

### Mode for the Invention

Regarding the terms in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, terms which can be arbitrarily selected by the applicant in particular cases. In such a case, the meaning of the terms will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

Hereinafter, the present disclosure will now be described more fully with reference to the accompanying drawings, in which exemplary embodiments of the present disclosure are shown such that one of ordinary skill in the art may easily work the present disclosure. The disclosure can, however, be embodied in many different forms and should not be construed as being limited to the embodiments set forth herein.

Hereinafter, embodiments of the present disclosure will be described in detail with reference to the drawings.

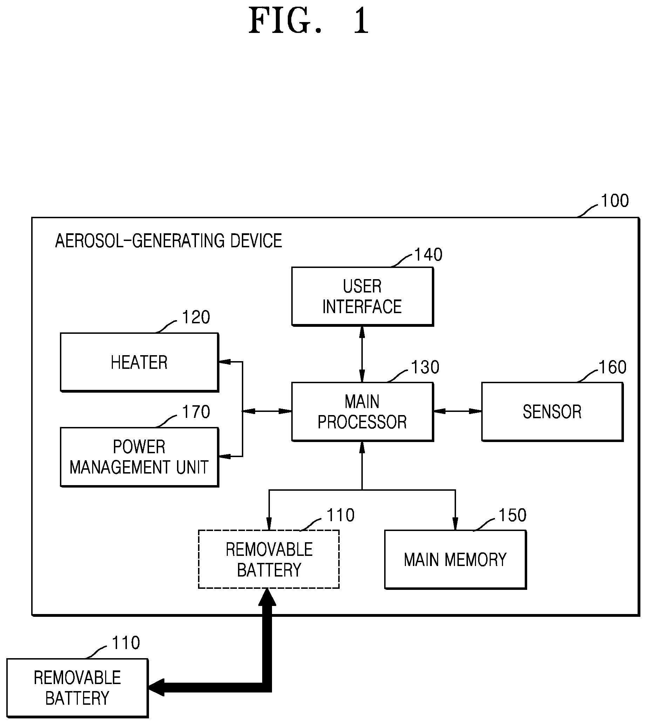

FIG. 1 is a block diagram illustrating a hardware configuration of an aerosol-generating device, according to an embodiment.

Referring to FIG. 1, an aerosol-generating device 300 may include a removable battery 110, a heater 120, a main processor 130, a user interface 140, a main memory 150, a sensor 160, and a power management unit 170. However, hardware components inside the aerosol-generating device 300 are not limited to those illustrated in FIG. 1. It will be understood by one of ordinary skill in the art related to the present embodiment that some of the hardware components illustrated in FIG. 1 may be omitted or new components (e.g., a connecting port and other communication modules) may be further added according to a design of the aerosol-generating device 300.

Hereinafter, an operation of each component included in the aerosol-generating device 300 will be described without limiting a space where each component is located.

The removable battery 110 supplies power used to operate the aerosol-generating device 300. For example, the removable battery 110 may supply power so that the heater 120 is heated. Also, the removable battery 110 may supply power required for operations of other hardware components provided in the aerosol-generating device 300, that is, the heater 120, the main processor 130, the user interface 140, the main memory 150, the sensor 160, or the power management unit 170. The removable battery 110 may be, for example, but is not limited to, a lithium polymer (LiPoly) battery or a lithium ion battery.

The removable battery 110 is a replaceable (separable) power source, and may be mounted in or removed from a battery receiving portion provided in the aerosol-generating device 300. The removable battery 110 may include an electrical contact, and when the removable battery 110 is mounted on the aerosol-generating device 300, the electrical contact of the removable battery 110 may be electrically connected to an electrical contact provided in the aerosol-generating device 300 to supply power to the aerosol-generating device 300. In another example, instead of a separate electrical contact, the removable battery 110 may include a charging coil for supplying power to the aerosol-generating device 300 by using a wireless charging method. That is, there may be various power supply methods of the removable battery 110, and an electrical connection method between the removable battery 110 and the aerosol-generating device 300 may vary according to a power supply method supported by the removable battery 110.

The removable battery 110 may include a charger interface that may be connected to an external charger. Power for charging the removable battery 110 may be provided to the removable battery 110 through the charger interface. The removable battery 110 may be charged by the external charger in a state where the removable battery 110 is coupled to the aerosol-generating device 300 or is uninstalled from the aerosol-generating device 300.

The removable battery 110 may include at least one battery cell. The battery cell may have different electrodes formed at both ends along a longitudinal direction or may be formed in a cylindrical shape. However, a shape of the battery cell is not limited thereto. For example, the battery cell may be a prismatic battery cell or a pouch-type battery cell.

The heater 120 receives power from the removable battery 110 under the control of the main processor 130. The heater 120 may heat a cigarette inserted into the aerosol-generating device 300 or heat a cartridge mounted on the aerosol-generating device 300, by using power supplied from the removable battery 110. That is, the heater 120 may generate aerosol by heating an aerosol generating material provided in the cigarette or the cartridge.

The heater 120 may be located in a main body of the aerosol-generating device 300. Alternatively, when the aerosol-generating device 300 includes the main body and the cartridge, the heater 120 may be located in the cartridge. When the heater 120 is located in the cartridge, the heater 120 may receive power from the removable battery 110 located in the main body.

The heater 120 may be an electro-resistive heater formed of an electro-resistive material. For example, the electro-resistive material may be a metal or a metal alloy including, but not limited to, titanium, zirconium, tantalum, platinum, nickel, cobalt, chromium, hafnium, niobium, molybdenum, tungsten, tin, gallium, manganese, iron, copper, stainless steel, or nichrome. The heater 120 may be implemented as, but is not limited to, a metal heating wire, a metal heating plate on which an electrically conductive track is disposed, or a ceramic heating element.

The heater 120 may be an induction heater. The heater 120 may correspond to a heater assembly implemented as a set of an electrically conductive coil and a susceptor for heating the cigarette or the cartridge through induction heating.

The heater 120 may heat the cigarette inserted into a receiving space provided in the aerosol-generating device 300. As the cigarette is accommodated in the receiving space of the aerosol-generating device 300, the heater 120 may be located inside and/or outside the cigarette. Accordingly, the heater 120 may generate aerosol by heating an aerosol generating material in the cigarette.

The heater 120 may be implemented as a coil heater provided only in the cartridge. The cartridge may include the coil heater, a liquid transfer means, and a liquid storage, and a liquid generating material accommodated in the liquid storage may be transferred through the liquid transfer means and the coil heater may heat the aerosol generating material absorbed by the liquid transfer means to generate aerosol. For example, when the heater 120 is the coil heater, the heater 120 may be made of a material such as nickel chromium and may be wound around the liquid transfer means or disposed adjacent to the liquid transfer means.

The main processor 130 is hardware that controls an overall operation of the aerosol-generating device 300. The main processor 130 may include at least one processing unit such as a micro-controller unit (MCU). The main processor 130 may include an array of logic gates, or may include a combination of a general-purpose microprocessor and a memory in which a program executable by the microprocessor is stored. Also, it will be understood by one of ordinary skill in the art to which the present embodiment pertains that the main processor 130 may be implemented as another type of hardware.

The main processor 130 may analyze a result sensed by the sensor 160, and may control processes to be performed later based on the sensed result. According to an embodiment, the main processor 130 may determine a coupling method between battery cells, based on the result sensed by the sensor 160. For example, the sensor 160 may be a humidity detection sensor. In this case, the humidity detection sensor may be any one of an electro-resistive sensor, a capacitive sensor, and an optical sensor. The main processor 130 may determine whether the cigarette inserted into the aerosol-generating device 300 is a normal cigarette with a moisture content below a preset threshold value or a humidified cigarette with a moisture content greater than or equal to the preset threshold value, by using the humidity detection sensor. When a plurality of battery cells are mounted on the removable battery 110, the main processor 130 may connect the plurality of battery cells in parallel when detecting that the inserted cigarette is a normal cigarette and may connect the plurality of battery cells in series when detecting that the inserted cigarette is a humidified cigarette.

However, a method of determining a coupling method of battery cells mounted on the removable battery 110 is not limited thereto. For example, when it is detected that a plurality of battery cells are mounted on the removable battery 110, the user interface 140 may display, on a display, a message for checking whether to connect the plurality of battery cells in series or in parallel. A user of the aerosol-generating device 300 may determine a method of coupling the plurality of battery cells mounted on the removable battery 110, by responding to the message.

The main processor 130 may analyze a result sensed by the sensor 160 and may control processes to be performed later based on the sensed result. For example, the main processor 130 may control power supplied to the heater 120 so that an operation of the heater 120 starts or ends, based on the result sensed by the sensor 160. For example, the main processor 130 may control the amount or time of power supplied to the heater 120 so that the heater 120 is heated to a certain temperature or is maintained at an appropriate temperature, based on the result sensed by the sensor 160.

The main processor 130 may control an operation of the heater 120 based on a pre-stored temperature profile. Also, the main processor 130 may sense the user's puff by using a puff sensor in the sensor 160, and then may control a temperature of the heater 120. Also, the main processor 130 may count the number of puffs by using the puff sensor, and then when the number of puffs reaches a preset number, may stop power supply to the heater 120.

The main processor 130 may control the user interface 140, based on the sensed result. For example, when the number of puffs is counted by using the puff sensor and then the number of puffs reaches a preset number, the main processor 130 may notify the user that the aerosol-generating device 300 will soon be terminated by using a lamp, a motor, or a speaker.

The main processor 130 may determine a heating mode of the heater 120 based on the number of battery cells included in the removable battery 110 and a connection method between the battery cells.

The user interface 140 may provide information about a state of the aerosol-generating device 300 to the user. The user interface 140 may include various interfacing means such as a display or a lamp that outputs visual information (UI screen), a motor that outputs haptic information, a speaker that outputs sound information, an input/output interfacing means (e.g., a button or a touchscreen) that receives input information from the user or outputs information to the user, and terminals for receiving charging power.

The main memory 150 is hardware in which various pieces of data processed in the aerosol-generating device 300 are stored, and the main memory 150 may store pieces of data processed and to be processed by the main processor 130. The main memory 150 may include various types of memories, such as random-access memory such as dynamic random access memory (DRAM) or static random access memory (SRAM), read-only memory (ROM), and electrically erasable programmable read-only memory (EEPROM).

The main memory 150 may store various information such as an operation time of the aerosol-generating device 300, a maximum number of puffs, a temperature profile, the user's smoking information, and information for battery authentication.

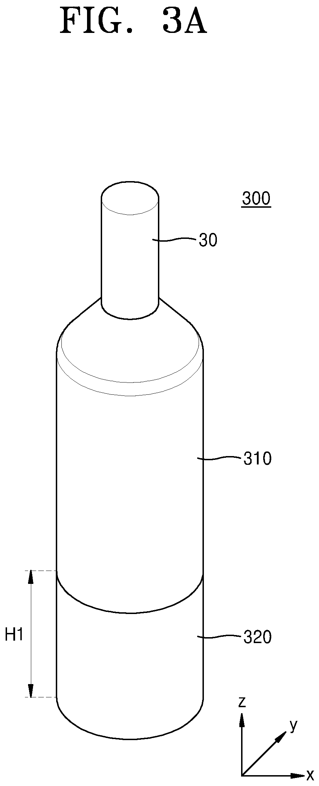

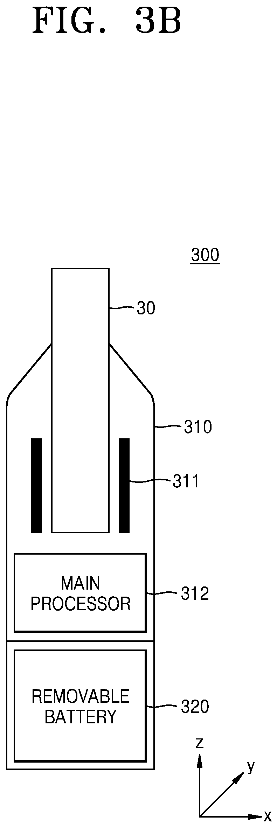

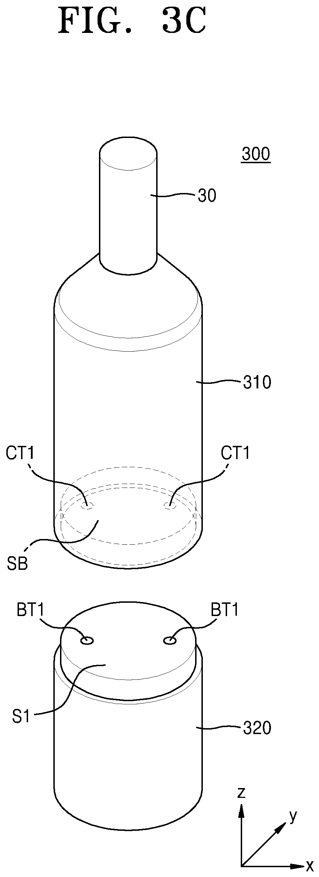

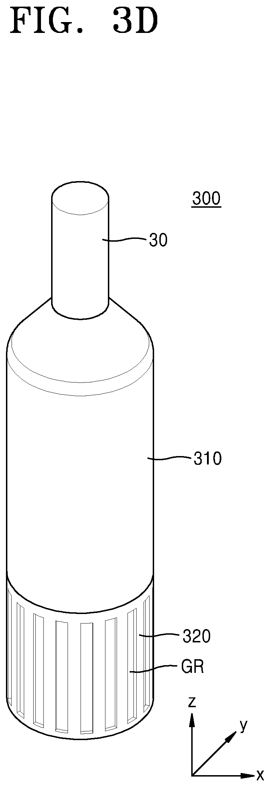

The power management unit 170 may change an output level and a capacity of the removable battery 110 by changing a coupling method between the battery cells mounted on the removable battery 110, under the control of the main processor 130, which will be described below in more detail with reference to FIGS. 3 to 7.

Although not shown in FIG. 1, the aerosol-generating device 300 may constitute an aerosol generating system together with a separate cradle. For example, the cradle may be used to store the aerosol-generating device 300 and charge the removable battery 110 of the aerosol-generating device 300. That is, the cradle may be a dedicated device for the aerosol-generating device 300 to receive power from a battery of the cradle and charge the removable battery 110 of the aerosol-generating device 300 in a state where the aerosol-generating device 300 is accommodated in a receiving space of the cradle.

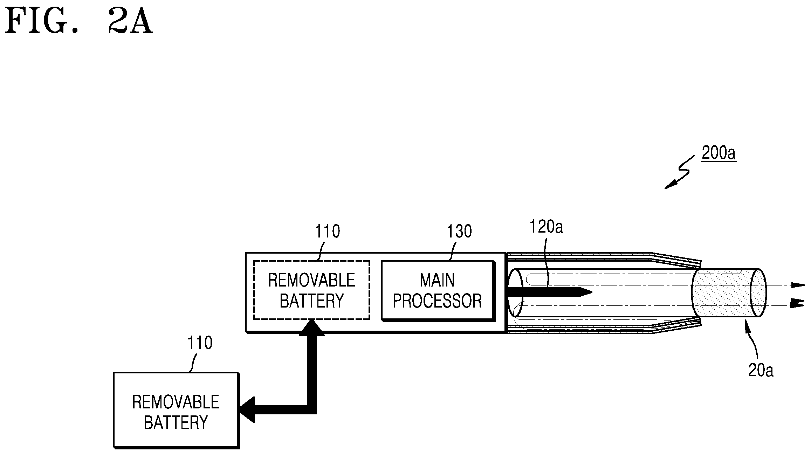

FIGS. 2A through 2E are diagrams illustrating embodiments of the aerosol generating device of FIG. 1, which is implemented in various types. Referring to FIGS. 2A through 2E, the aerosol generating device 100 may be implemented as various types of aerosol generating devices 200a through 200e using an electrically resistive heating method or an induction heating method, a method that additionally includes a vaporizer, a cartridge method, or the like. FIGS. 2A through 2E only show some elements to describe the types of aerosol generating devices 200a through 200e, and other general elements may be further included in the aerosol generating devices 200a through 200e in addition to the elements shown in FIGS. 2A through 2E.

In FIGS. 2A through 2E, the removable battery 110, heaters 120a through 120e, and the main processor 130 are components respectively corresponding to the removable battery 110, the heater 120, and the main processor 130 of FIG. 1, which may perform functions of the removable battery 110, the heater 120, and the main processor 130 described above in FIG. 1.

FIG. 2A is a diagram to describe an aerosol generating device 200a in an electrically resistive method, according to an embodiment. The aerosol generating device 200a may be a type of the aerosol generating device 100.

Referring to FIG. 2A, the aerosol generating device 200a may include the removable battery 110, a heater 120a, and the main processor 130.

A cigarette 20a may be inserted into an accommodation space inside the aerosol generating device 200a. When the cigarette 20a is inserted into the aerosol generating device 200a, the aerosol generating device 200a may generate aerosols from the cigarette 20a by heating the cigarette 20a by using the heater 120a. Because the generated aerosols are delivered to the user by passing through the cigarette 20a, the user may smoke the cigarette 20a.

The heater 120a may be heated by power supplied from the removable battery 110. The heater 120a may be an electrically resistive heater. For example, the heater 120a may include an electrically conductive track, and the heater 120a may be heated when currents flow through the electrically conductive track.

The electrically conductive track of the heater 120a may be made of an electrically resistive material and a heating temperature thereof may be determined according to power consumption of resistance, and a resistance value of the electrically conductive track may be set based on the power consumption of resistance of the electrically conductive track. The resistance value of the electrically conductive track may be variously set according to a configuring material, length, width, thickness, pattern, or the like of the electrically resistive material.

The electrically conductive track may have an internal resistance level that increases as temperature increases, according to a resistance temperature coefficient characteristic. For example, in a certain temperature range, the temperature of the electrically conductive track and the size of resistance may be proportional. By using such a principle, the heater 120a made of the electrically conductive track may heat the cigarette 20a in the electrically resistive method.

The electrically conductive track may be made of tungsten, gold, platinum, silver copper, nickel palladium, or a combination thereof. Also, the electrically conductive track pattern may be doped with a suitable dopant and may include an alloy.

The shape of the heater 120a may be manufactured in various ways, such as a tube shape, a plate shape, a needle shape, a rod shape, or the like. In addition, the heater 120a may be arranged with a plurality of heaters. The heater 120a may be used in an internal heating method of heating the inside of the cigarette 20a by being inserted into the interior of the cigarette 20a.

The removable battery 110 may be separated from or mounted in the aerosol generating device 200a. When the removable battery 110 is mounted in the aerosol generating device 200a, power may be supplied to the heater 120a from the removable battery 110 to control the temperature of the electrically conductive track to perform a heating operation of the heater 120a.

The main processor 130 may control the heating operation of the heater 120a by controlling the power supplied to the heater 120a. For example, the main processor 130 may control a temperature at which the cigarette 20a is heated by the heater 120a, according to a temperature profile.

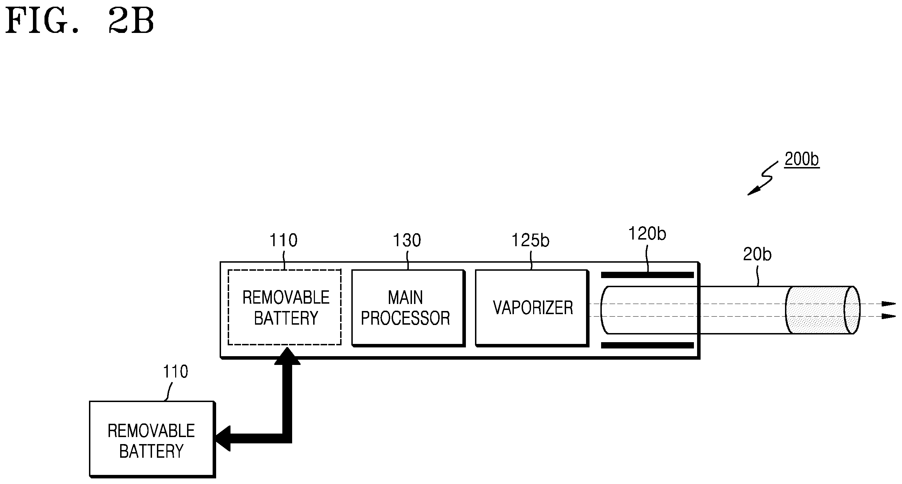

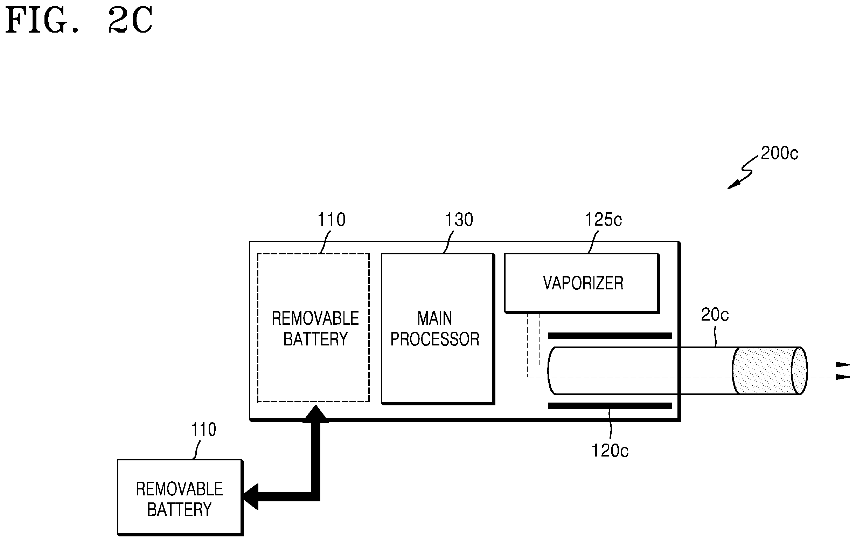

FIGS. 2B and 2C are diagrams to describe aerosol generating devices 200b and 200c additionally including vaporizers 125b and 125c, respectively, according to embodiments. Each of the aerosol generating devices 200b and 200c may be a type of the aerosol generating device 100.

Referring to FIGS. 2B and 2C, the aerosol generating devices 200b and 200c further include the vaporizers 125b and 125c, respectively. Cigarettes 20b and 20c may be inserted into inner spaces of the aerosol generating devices 200b and 200c, respectively.

FIG. 2B illustrates that the vaporizer 125b and a heater 120b are arranged in a row. However, FIG. 2C illustrates that the vaporizer 125c and a heater 120c are arranged in parallel. That is, the aerosol generating devices 200b and 200c may be distinguished depending on a way the vaporizer 125b is arranged.

The heaters 120b and 120c may be heated by power supplied from the removable battery 110. The heaters 120b and 120c are electrically resistive heaters and may include, for example, electrically conductive tracks.

Unlike the heater 120a described with reference to FIG. 2A, the heaters 120b and 120c in FIGS. 2B and 2C may be implemented in an external heating method of heating outer surfaces of the cigarettes 20b and 20c by being arranged on outer peripheries of the cigarettes 20b and 20c.

The vaporizers 125b and 125c may generate aerosols by heating a liquid composition, and the generated aerosols may pass through the cigarettes 20b and 20c to be delivered to the user. In other words, the aerosols generated by the vaporizers 125b and 125c may be transported along an air flow passage of the aerosol generating devices 200b and 200c, and the air flow passage may be configured so that the aerosols generated by the vaporizers 125b and 125c pass through the cigarettes 20b and 20c to be delivered to the user.

The vaporizers 125b and 125c may include a liquid storage unit, a liquid delivery element, and a heating element (or a vaporizing element). However, each of the liquid storage unit, the liquid delivery element, and the heating element is an independent module, which may also be arranged in other locations within the aerosol generating device 100 instead of within the vaporizers 125b and 125c.

The liquid storage unit may store a liquid composition. For example, the liquid composition may be a liquid including a tobacco-containing material having a volatile tobacco flavor component, or a liquid including a non-tobacco material. The liquid storage unit may be formed to be detached/attached from/to the vaporizers 125b and 125c or may be formed integrally with the vaporizers 125b and 125c. For example, the liquid composition may include water, a solvent, ethanol, plant extract, spices, flavorings, or a vitamin mixture. Also, the liquid composition may include an aerosol forming agent, such as glycerin and propylene glycol.

The liquid delivery element may deliver the liquid composition of the liquid storage unit to the heating element. For example, the liquid delivery element may be a wick such as cotton fiber, ceramic fiber, glass fiber, or porous ceramic, but is not limited thereto.

The heating element provided in the vaporizers 125b and 125c is an element configured to heat (vaporize) the liquid composition delivered by the liquid delivery element. For example, the heating element may be a metal heating wire, a metal hot plate, a ceramic heater, or the like, but is not limited thereto. In addition, the heating element may include a conductive filament such as nichrome wire and may be positioned as being wound around the liquid delivery element. The heating element may be heated by a current supply and may transfer heat to the liquid composition in contact with the heating element, thereby heating the liquid composition. As a result, aerosols may be generated. Accordingly, the vaporizers 125b and 125c may also be referred to as in other terms such as cartomizers or atomizers.

The removable battery 110 may be separated from or mounted in the aerosol generating devices 200b and 200c. When the removable battery 110 is mounted in the aerosol generating devices 200b and 200c, power may be supplied to the heaters 120b and 120c and the vaporizers 125b and 125c from the removable battery 110 to perform heating operations of the heaters 120b and 120c and the vaporizers 125b and 125c.

The main processor 130 may control the heating operations of the heaters 120b and 120c and the vaporizers 125b and 125c by controlling power supplied to the heaters 120b and 120c and the vaporizers 125b and 125c. For example, the main processor 130 may control temperatures at which the cigarettes 20b and 20c are heated by the heaters 120b and 120c and the vaporizers 125b and 125c, according to temperature profiles.

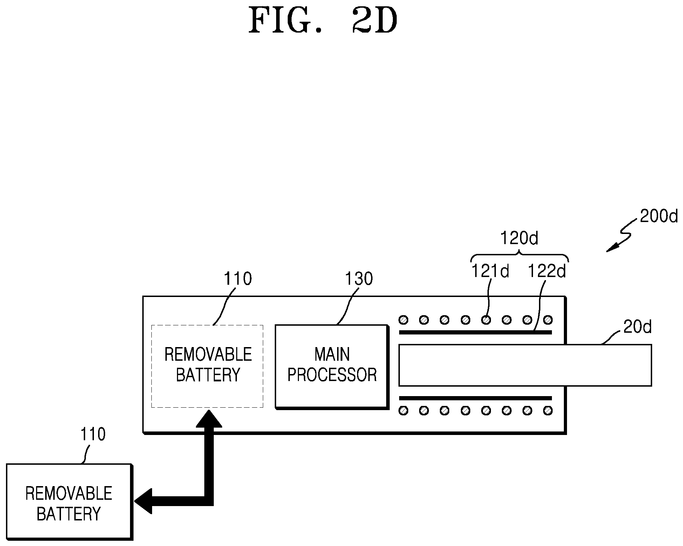

FIG. 2D is a diagram to describe an aerosol generating device 200d in an induction heating method, according to an embodiment. The aerosol generating device 200d may be a type of the aerosol generating device 100.

Referring to FIG. 2D, the aerosol generating device 200d may include a heater 120d including a coil 121d and a susceptor 122d, the removable battery 110, and the main processor 130.

The aerosol generating device 200d may generate aerosols by heating a cigarette 20d accommodated in the aerosol generating device 200d in an induction heating method. The induction heating method may refer to a method of heating a magnetic body by applying an alternating magnetic field, which has a periodically changing direction, to the magnetic body generating heat by an external magnetic field. Accordingly, the aerosol generating device 200d may release thermal energy from the magnetic body by applying the alternating magnetic field to the magnetic body, and may transfer the thermal energy released from the magnetic body to the cigarette 20d, thereby heating the cigarette 20d. Here, the magnetic body generating heating by an external magnetic field may be the susceptor 122d. The susceptor 122d may be provided in the aerosol generating device 200d. Alternatively, the susceptor 122d may also be provided inside the cigarette 20d in the shape of a piece, thin plate, strip, or the like, instead of being provided in the aerosol generating device 200d.

The susceptor 122d may include a ferromagnetic substance. For example, the material of the susceptor 122d may include metal or carbon. The material of the susceptor 122d may include at least one of ferrite, ferromagnetic alloy, stainless steel, and aluminum (Al). Also, the material of the susceptor 122d may include at least one of a ceramic such as graphite or zirconia, a transition metal such as nickel (Ni) or cobalt (Co), and a metalloid such as boron (B) or phosphorus (P).

The aerosol generating device 200d may accommodate the cigarette 20d. A space accommodating the cigarette 20d may be formed in the aerosol generating device 200d. The susceptor 122d may be arranged around the periphery of the space that accommodates the cigarette 20d. For example, the susceptor 122d may have a cylindrical shape surrounding the outside of the cigarette 20d. Accordingly, when the cigarette 20d is accommodated in the aerosol generating device 200d, the cigarette 20d may be accommodated in an accommodation space of the susceptor 122d, and the susceptor 122d may be arranged at a position surrounding at least a portion of an outer surface of the cigarette 20d. However, the shape of the susceptor 122d is not limited thereto and may vary.

As the heater 120d is in an induction heating method, the heater 120d may heat the cigarette 20d accommodated in the aerosol generating device 200d by using the susceptor 122d that generates heat by an external magnetic field generated by the coil 121d.

The coil 121d may be arranged to be wound along the outer surface of the susceptor 122d, so that an alternating magnetic field may be applied to the susceptor 122d. When power is supplied to the coil 121d from the aerosol generating device 200d, a magnetic field may be formed inside the coil 121d. When an alternating current is applied to the coil 121d, a direction of the magnetic field formed inside the coil 121d may be continuously changed. When the susceptor 122d is located inside the coil 121d and is exposed to an alternating magnetic field having a periodically changing direction, the susceptor 122d may generate heat, and a cigarette accommodated in the susceptor 122d may be heated. The shape of the coil 121d may be a cylindrical shape wound along the cigarette 20d, but is not limited thereto, and the coil 121d may also be implemented in various types, such as a flat coil or the like.

The removable battery 110 may be separated from or mounted in the aerosol generating device 200d. When the removable battery 110 is mounted in the aerosol generating device 200d, for example, power may be supplied to the coil 121d to perform a heating operation of the heater 120d.

The main processor 130 may control the heating operation of the heater 120d by controlling the power supplied to the coil 121d. For example, the main processor 130 may control a temperature at which the cigarette 20d is heated by induction heating of the susceptor 122d by adjusting the intensity of a magnetic field induced by the coil 121d according to a temperature profile.

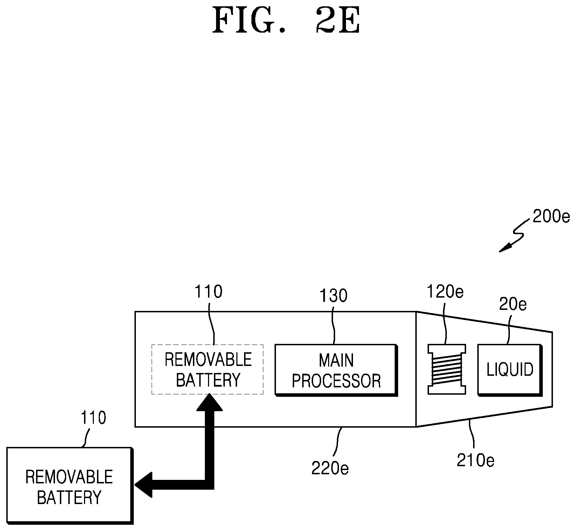

FIG. 2E is a diagram to describe an aerosol generating device 200e including a replaceable cartridge 210e containing an aerosol generating material 20e.

The aerosol generating device 200e of FIG. 2E includes the cartridge 210e containing the aerosol generating material 20e, and a body 220e supporting the cartridge 210e. The aerosol generating device 200e may correspond to a type of the aerosol generating device 100 of FIG. 1. At this time, the hardware components included in the aerosol generating device 100 of FIG. 1 may be dividedly positioned in the body 220e and the cartridge 210e.

The cartridge 210e may be coupled to the body 220e in a state in which the aerosol generating material 20e is accommodated therein. The cartridge 210e may be mounted on the body 220e by inserting a portion of the cartridge 210e into a receptacle of the body 220e.

The cartridge 210e may contain the aerosol generating material 20e of a liquid composition, but is not limited thereto, and may contain the aerosol generating material 20e in any one of a solid state, a gaseous state, or a gel state. For example, the liquid composition may be a liquid including a tobacco-containing material having a volatile tobacco flavor component, or a liquid including a non-tobacco material.

A heater 120e provided in the cartridge 210e performs a heating operation by an electrical signal or wireless signal transmitted from the body 220e. Accordingly, aerosols may be generated by vaporizing the aerosol generating material 20e inside the cartridge 210e by heating of the heater 120e.

The heater 120e may be implemented as a conductive filament or ceramic heating body including a metal material, such as copper, nickel, tungsten, or the like, to heat an aerosol generating material delivered by a liquid delivery element by generating heat through electrical resistance, and may be wound around the liquid delivery element or arranged adjacent to the liquid delivery element.

The removable battery 110 may be separated from or mounted in the aerosol generating device 200e. When the removable battery 110 is mounted in the aerosol generating device 200e, power may be supplied to the heater 120e from the removable battery 110 to perform a heating operation of the heater 120e.

The main processor 130 may control the heating operation of the heater 120e by controlling the power supplied to the heater 120e. For example, the main processor 130 may control a temperature at which the aerosol generating material 20e is heated by the heater 120e, according to a temperature profile.

Although not illustrated in FIGS. 2A through 2E, the aerosol generating devices 200a through 200e and a separate cradle may form together a system. For example, the cradle may store the aerosol generating devices 200a through 200e or perform charging of the removable battery 110 of the aerosol generating devices 200a through 200e.

According to various embodiments, the aerosol generating device 100 of FIG. 1 may be implemented as at least one of the types of the aerosol generating devices 200a through 200e of FIGS. 2A through 2E, but is not necessarily limited thereto, and may be implemented as other types.

The aerosol generating devices 200a through 200e of FIGS. 2A through 2E may commonly use the removable battery 110 as a power source. The removable battery 110 is a battery that may be replaced by mounting in or separating from the aerosol generating devices 200a through 200e.

FIGS. 3A to 3D are views for describing an aerosol-generating device, according to an embodiment.

Referring to FIGS. 3A to 3D, the aerosol-generating device 300 according to an embodiment may include a main body 310 into which an aerosol generating article 30 is inserted, and a removable battery 320. In this case, a heater 311 may correspond to the heaters 120a to 120e of FIGS. 2A to 2E, the aerosol generating article 30 may correspond to the cigarettes 20a to 20d of FIGS. 2A to 2D and the aerosol generating material 20e of FIG. 2E, a main processor 312 may correspond to the main processor 130 of FIGS. 2A to 2E, and the removable battery 320 may correspond to the removable battery 110 of FIGS. 2A to 2E. Hereinafter, a repeated description will be omitted, and a difference will be mainly described with reference to FIGS. 3A to 3D.

Referring to FIGS. 3A and 3B, the main body 310 may refer to a housing in which various electronic/mechanical components are accommodated. The main body 310 may include the heater 311 for heating the aerosol generating article 30 and the main processor 312.

The main processor 312 may control an overall operation of the aerosol-generating device 300. For example, the main processor 312 may control operations of the heater 311 and the battery 320, and may also control operations of other components included in the aerosol-generating device 300. The main processor 312 may control power supplied by the battery 320 and a heating temperature of the heater 311.

The main processor 312 may include at least one processor. The processor may include an array of logic gates, or may include a combination of a general-purpose microprocessor and a memory in which a program executable by the microprocessor is stored. Also, it will be understood by one of ordinary skill in the art to which the present disclosure pertains that the main processor 312 may be implemented as another type of hardware.

The battery 320 supplies power used to operate the aerosol-generating device 300. For example, the battery 320 may supply power to the heater 311 and may supply power required to operate the main processor 312. Also, the battery 320 may supply power required for operations of a display, a sensor, a motor, etc. provided in the aerosol-generating device 300.

Although not shown, the aerosol-generating device 300 may further include an input device for receiving a user input. The input device may include a switch or a button, but the scope of the present disclosure is not limited thereto. In the present embodiment, the main processor 312 may control the aerosol-generating device 300 in response to a user input received through the input device. For example, the main processor 312 may control the aerosol-generating device 300 to generate aerosol as the user operates the switch or the button.

Referring to FIG. 3C, the main body 310 according to an embodiment may include a bottom surface SB exposed to the outside when the main body 310 is separated from the battery 320. The bottom surface SB may include a first connection terminal CT1 electrically connected to electronic components (e.g., the heater 311 and the main processor 312) disposed inside the main body 310.

The battery 320 according to an embodiment may be removably coupled to the main body 310. Although not shown, the battery 320 and the main body 310 according to an embodiment may include magnets in corresponding areas, and may be coupled to each other by using a magnetic force between the magnets. However, a method of coupling the main body 310 and the battery 320 to each other is not limited thereto, and may be modified in various ways according to design requirements. For example, a female screw thread may be formed on the main body 310 and a male screw thread may be formed on the battery 320, and the main body 310 and the battery 320 may be coupled to each other by using a screw coupling method. Also, a hook that may be elastically deformed by an external force may be formed on a portion of the battery 320 and a locking rib may be formed on a portion of the main body 310 corresponding to the hook, and the battery 320 and the main body 310 may be coupled to each other by using a hook coupling method.

The battery 320 may have a cross-sectional shape matching a cross-sectional shape of the main body 310, may extend in a longitudinal direction (i.e., a z direction) of the main body 310, and may form an outer circumferential surface (or an exterior) of the aerosol-generating device 300 together with the main body 310 when coupled to the main body 310. Remaining surfaces (e.g., a side surface and a bottom surface) other than a first surface S1 of the battery 320 facing the bottom surface SB of the main body 310 may be exposed to the outside.

For example, the main body 310 may generally have any one of a cylindrical shape, an elliptical column shape, and a polygonal column shape (e.g., a triangular column shape, a pentagonal column shape, or a hexagonal column shape). That is, the main body 310 may have any one cross-sectional shape from among a circular shape, an elliptical shape, and a polygonal shape (e.g., a triangular shape, a quadrangular shape, a pentagonal shape, or a hexagonal shape). In order to match a shape of the main body 310 to a shape of the battery 320, the battery 320 may also generally have any one of a cylindrical shape, an elliptical column shape, and a polygonal column shape (e.g., a triangular column shape, a quadrangular column shape, a pentagonal column shape, or a hexagonal column shape).

The battery 320 may include the first surface S1 (e.g., top surface) facing the bottom surface SB of the main body 310. The first surface S1 may include a first battery terminal BT1 electrically connected to the first connection terminal CT1.

Referring to FIG. 3D, the battery 320 according to an embodiment may include, on an outer circumferential surface (e.g., side surface), a grip portion for preventing slipping when the user holds the battery 320. The grip portion may include a plurality of grooves and/or protrusions. Although an embodiment where the grooves and protrusions are formed in the longitudinal direction (e.g., the z direction) is illustrated in FIG. 3D, the present disclosure is not limited thereto, and various modifications may be made according to design requirements. The grip portion may be formed of a material (e.g., rubber) that increases a frictional force when the user holds the grip portion.

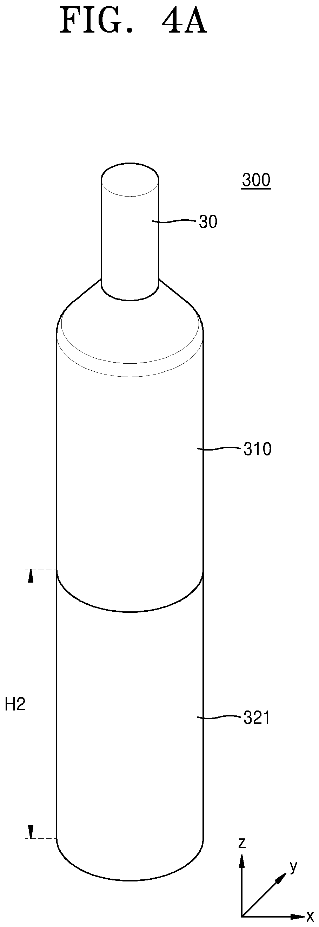

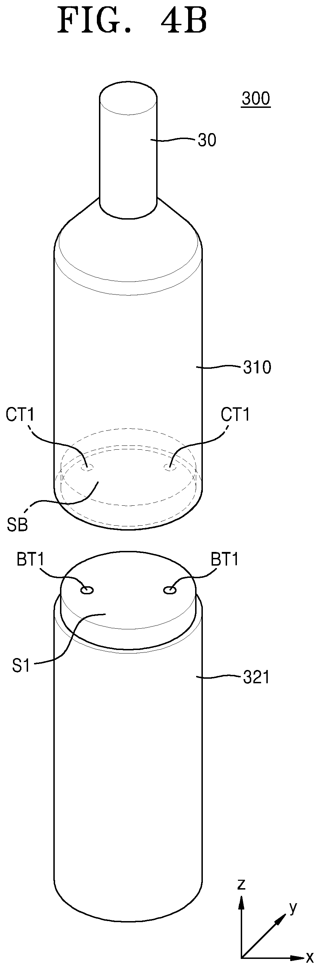

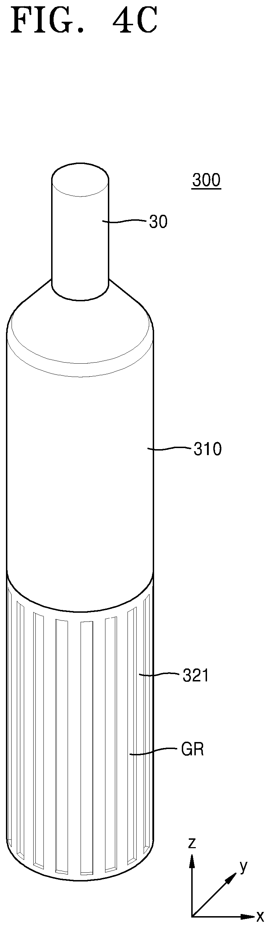

FIGS. 4A to 4C are views for describing an aerosol-generating device, according to another embodiment.

The aerosol-generating device 300 of FIG. 4A is substantially the same as the aerosol-generating device 300 of FIG. 3A except that the aerosol-generating device 4A includes the battery 320 having a larger capacity than the battery 320 included in the aerosol-generating device 300 of FIG. 3A, and thus, a repeated description will be omitted and a difference will be mainly described.

Referring to FIGS. 3A and 4A, the battery 320 (or first battery) of FIG. 3A may have a first length H1, and a battery 321 (or second battery) of FIG. 4A may have a second length H2 greater than the first length H1. Capacities of the batteries 320 and 321 may increase in proportion to lengths.

For example, the battery 320 (or the first battery) of FIG. 3A may have a first capacity, and the battery 321 (or the second battery) of FIG. 4A may have a second capacity greater than the first capacity. The second capacity may be about twice the first capacity.

Because both the battery 320 (or the first battery) of FIG. 3A and the battery 321 (or the second battery) of FIG. 4A according to an embodiment of the present disclosure are coupled to the bottom surface SB of the main body 310, and the first battery and the second battery have a different lengths (e.g., H1 and H2) in the longitudinal direction (e.g., the z direction) but have the same cross-sectional shape, there is no significant difference in the grip feeling when the user holds the aerosol-generating device 300.

A conventional removable battery is formed so that a cross-sectional area of a high-capacity battery (i.e., second battery) in a direction crossing the longitudinal direction is greater than that of a low-capacity battery (i.e., first battery), which causes discomfort in the grip of the user. On the other hand, because the batteries 320 and 321 according to an embodiment of the present disclosure extend in the longitudinal direction while maintaining a cross-sectional shape (or a cross-sectional area) constant, the effect of increasing a battery capacity and maintaining the user's grip feeling substantially the same may be expected.

Hereinafter, other embodiments will be described. In the embodiments below, the same configuration as that described in the above embodiments will not be described or will be briefly described, and a difference will be mainly described.

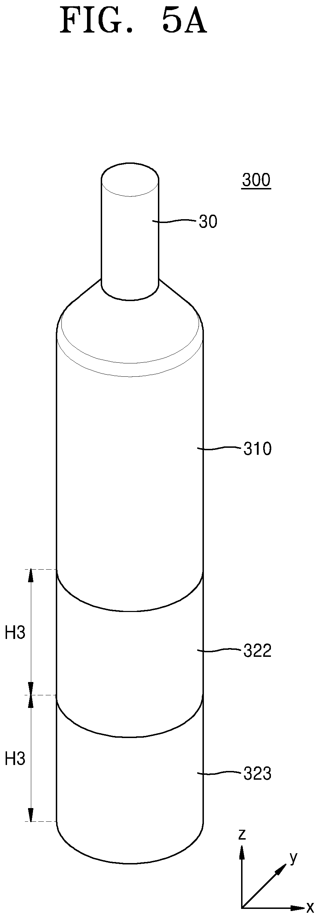

FIGS. 5A to 5D are views for describing an aerosol-generating device, according to another embodiment.

The aerosol-generating device 300 of FIG. 5A is substantially the same as the aerosol-generating device 300 of FIGS. 3A and 4A except that the aerosol-generating device 300 of FIG. 5A includes a modular battery that supplies power alone or in combination of two batteries whereas the aerosol-generating device 300 of FIGS. 3A and 4A supplies power with only one battery. Hereinafter, a repeated description will be omitted and a difference will be mainly described.

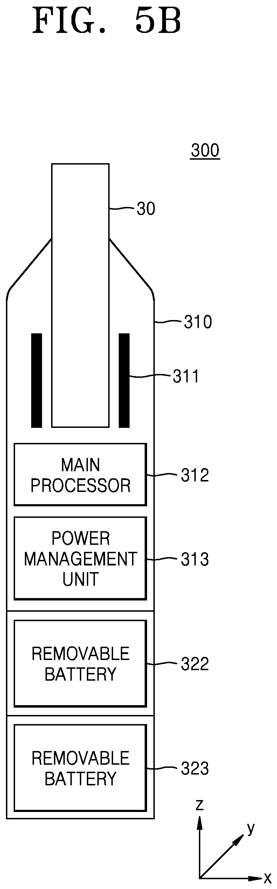

Referring to FIGS. 5A and 5B, the aerosol-generating device 300 may include a third battery 322 and a fourth battery 323 having the same length H3 and the same capacity.

The main body 310 may refer to a housing in which various electronic/mechanical components are accommodated. The main body 310 may include the heater 311 for heating the aerosol generating article 30, the main processor 312, and a power management unit 313.

The main processor 312 may control an overall operation of the aerosol-generating device 300. For example, the main processor 312 may control operations of the heater 311, the third battery 322, and the fourth battery 323, and may also control operations of other components included in the aerosol-generating device 300. The main processor 312 may control power supplied by the third battery 322 and the fourth battery 323 and a heating temperature of the heater 311.

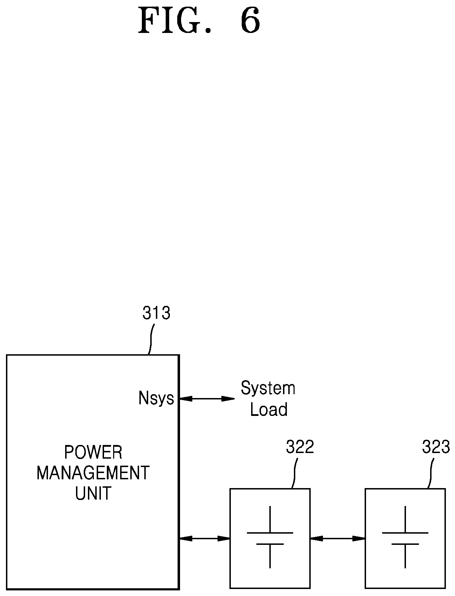

The power management unit 313 may receive power from at least one of the third battery 322 and the fourth battery 323, under the control of the main processor 312, which will be described below in more detail with reference to FIGS. 6 to 10.

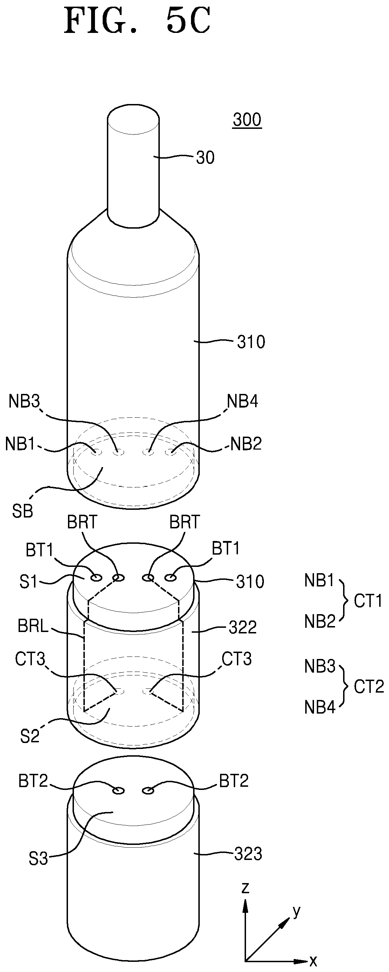

Referring to FIG. 5C, the main body 310 according to an embodiment may include the bottom surface SB that is exposed to the outside when the main body 310 is separated from the third battery 322 and the fourth battery 323. The bottom surface SB may include the first connection terminal CT1 and a second connection terminal CT2 electrically connected to electronic components (e.g., the heater 311, the main processor 312, and the power management unit 313) disposed inside the main body 310.

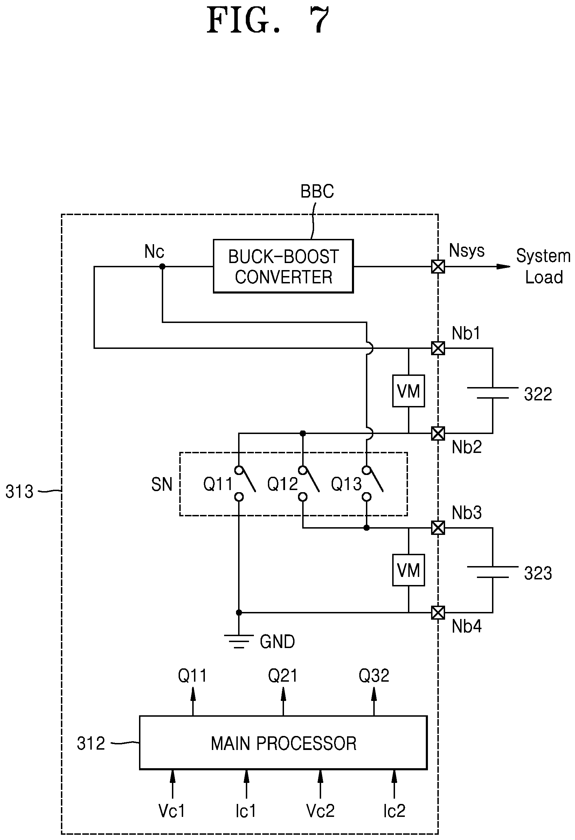

The first connection terminal CT1 may include a first node NB1 and a second node NB2 described below with reference to FIGS. 7 to 10, and the second connection terminal CT2 may include a third node NB3 and a fourth node NB4 described below with reference to FIGS. 7 to 10.

The third battery 322 according to an embodiment may be removably coupled to the main body 310. The fourth battery 323 may be removably coupled to the third battery 322.

Although not shown, the third battery 322 and the main body 310 may include magnets in corresponding areas, and may be coupled to each other by using a magnetic force between the magnets. However, a method of coupling the main body 310 and the third battery 322 to each other is not limited thereto, and may be modified in various ways according to design requirements. For example, a female screw thread may be formed on the main body 310 and a male screw thread may be formed on the third battery 322, and the main body 310 and the third battery 322 may be coupled to each other by using a screw coupling method. Also, a hook that may be elastically deformed by an external force may be formed on a portion of the third battery 322 and a locking rib may be formed on a portion of the main body 310 corresponding to the hook, and the third battery 322 and the main body 310 may be coupled to each other by using a hook coupling method. A coupling method between the third battery 322 and the main body 310 may be applied to a coupling method between the third battery 323 and the fourth battery 323.

The third battery 322 and the fourth battery 323 may have a cross-sectional shape matching a cross-sectional shape of the main body 310, may extend in the longitudinal direction (e.g., the z direction) of the main body 310, and may form an outer circumferential surface (or an exterior) of the aerosol-generating device 300 together with the main body 310 when the third battery 322 and the fourth battery 323 are coupled to the main body 310.

When the third battery 322 is coupled to the main body 310 alone, remaining surfaces (e.g., a side surface and a second surface S2 (or a bottom surface)) other than the first surface S1 facing the bottom surface SB of the main body 310 may be exposed to the outside. When the third battery 322 is coupled to the main body 310 and the fourth battery 323, remaining surfaces (e.g., side surface) other than the first surface S1 and the second surface S2 may be exposed to the outside. Also, when the fourth battery 323 is coupled to the third battery 322, remaining surfaces (e.g., a side surface and a bottom surface) other than a third surface S3 facing the second surface S2 of the third battery 322 may be exposed to the outside.

For example, the main body 310 may have any one of a cylindrical shape, an elliptical column shape, and a polygonal column shape (e.g., a triangular column shape, a pentagonal column shape, or a hexagonal column shape). That is, the main body 310 may have any one cross-sectional shape from among a circular shape, an elliptical shape, and a polygonal shape (e.g., a triangular shape, a quadrangular shape, a pentagonal shape, or a hexagonal shape). In order to match a shape of the main body 310 to shapes of the batteries 322 and 323, the batteries 322 and 323 may also generally have any one of a cylindrical shape, an elliptical column shape, and a polygonal column shape (e.g., a triangular column shape, a quadrangular column shape, a pentagonal column shape, or a hexagonal column shape).

The third battery 322 may include the first surface S1 (e.g., top surface) facing the bottom surface SB of the main body 310. The first surface S1 may include a first battery terminal BT1 electrically connected to the first connection terminal CT1 and a first connecting terminal BRT electrically connected to the second connection terminal CT2.

Also, the third battery 322 according to an embodiment may include the second surface S2 (e.g., bottom surface) facing the third surface S3 of the fourth battery 323. The second surface S2 may include a third connection terminal CT3 electrically connected to the first connecting terminal BRT. In FIG. 5C, for convenience of explanation, the first connecting terminal BRT of the first surface S1 and the third connection terminal CT3 of the second surface S2 are electrically connected to each other by a connection wire BRL. However, the present disclosure is not limited thereto, and the first connecting terminal BRT and the third connection terminal CT3 may be electrically connected to each other through a printed circuit board or an electrode.

The fourth battery 323 may include the third surface S3 (e.g., the top surface) facing the second surface S2 of the third battery 322. The third surface S3 may include a second battery terminal BT2 electrically connected to the third connection terminal CT3.

Although the main processor 312 and the power management unit 313 are illustrated as separate blocks in FIG. 5B, the two elements may be integrated for design convenience.

Referring to FIG. 5C, the aerosol-generating device 300 does not have a balancing issue between battery cells when each of the third battery 322 or the fourth battery 323 is connected to the main body 310 alone. However, when both the third battery 322 and the fourth battery 323 are connected (in series or parallel) to the main body 31 and voltages and capacities of the two batteries do not satisfy the same conditions, battery damage or heat generation problems may occur.

In order to prevent these problems, the aerosol-generating device 300 may further include the power management unit 313 controlled by the main processor 312. When both the third battery 322 and the fourth battery 323 are coupled to the main body 310, the main processor 312 according to an embodiment may compare a magnitude of a voltage of the third battery 322 with a magnitude of a voltage of the fourth battery 323 by using a voltage sensor. When a difference between a magnitude of a voltage of the third battery 322 and a magnitude of a voltage of the fourth battery 323 is greater than or equal to a preset threshold value, the main processor 312 may electrically connect only a battery having a larger voltage from among the third battery 322 and the fourth battery 323 to the main body 310. On the other hand, when a difference between a magnitude of a voltage of the third battery 322 and a magnitude of a voltage of the fourth battery 323 is less than the threshold value, the main processor 312 may electrically connect both the third battery 322 and the fourth battery 323 to the main body 310. In this case, the preset threshold value may be a voltage value at which the magnitude of the voltage of the third battery 322 and the magnitude of the voltage of the fourth battery 323 may be considered to be substantially the same. A method of controlling electrical coupling between the third battery 322 and the fourth battery 323 will be described below in more detail with reference to FIGS. 6 to 10.

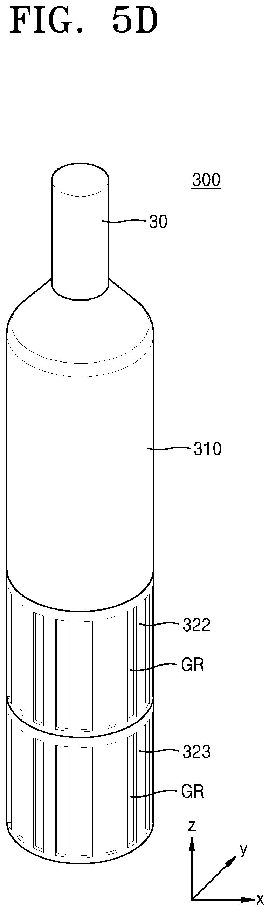

Referring to FIG. 5D, the third battery 322 and the fourth battery 323 according to an embodiment may include, on an outer circumferential surface (e.g., a side surface), a grip portion for preventing slipping when the user holds. The grip portion may include a plurality of grooves and/or protrusions. Although an embodiment where the grooves and protrusions are formed in the longitudinal direction (e.g., the z direction) is illustrated in FIG. 5D, the present disclosure is not limited thereto and various modifications may be made according to design requirements. The grip portion may be formed of a material (e.g., rubber) for increasing a frictional force when the user holds the grip portion.

FIG. 6 is a diagram for describing operations of a plurality of batteries and a power management unit.

Referring to FIG. 3, the third battery 322 and the fourth battery 323 according to an embodiment may be removably coupled to the main body 310. For example, each of the third battery 322 and the fourth battery 323 may be coupled to the main body 31 alone. Alternatively, the third battery 322 may be coupled to the main body 310, and the fourth battery 323 may be coupled to the third battery 322.

The third battery 322 and the fourth battery 323 may be electrically connected in series or in parallel. When the third battery 322 and the fourth battery 323 are connected in series, an output voltage may have a magnitude proportional to the number of batteries connected in series. When the third battery 322 and the fourth battery 323 are connected in series, a total capacity may be substantially the same as a capacity of one battery.

In contrast, when the third battery 322 and the fourth battery 323 are connected in parallel, an output voltage may be substantially the same as a voltage of one battery. When the third battery 322 and the fourth battery 323 are connected in parallel, a total capacity may be proportional to the number of batteries connected in parallel.

The power management unit 313 may supply power of the third battery 322 and/or the fourth battery 323 to a system load. The system load may be a concept that collectively refers to components (e.g., the heater 311 and the main processor 312 of FIG. 5B) that consume power inside the aerosol-generating device 300. In general, an integrated circuit such as a power management IC (PMIC) is connected to a system node Nsys to generate various voltages required in a system and then provide the voltages to the components in the system.

The power management unit 313 may connect the third battery 322 and the fourth battery 323 in series or in parallel and may supply power to the system load by discharging at least one of the third battery 322 and the fourth battery 323. To this end, the power management unit 313 may include a switch network for changing a connection relationship so that the third battery 322 and the fourth battery 323 are connected in series or in parallel to each other.

FIG. 7 is a diagram for describing a power management unit, according to an embodiment of the present disclosure.

Referring to FIG. 7, the power management unit 313 may include a switch network SN, a buck-boost converter BBC, and a voltage sensor VM.

Also, the power management unit 313 may include an input node Nc connected to one end (or an input terminal) of the buck-boost converter BBC, the system node Nsys connected to the system load, a first node Nb1 connected to a positive terminal of the third battery 322, a second node Nb2 connected to a negative terminal of the third battery 322, a third node Nb3 connected to a positive terminal of the fourth battery 323, and a fourth node Nb4 connected to a negative terminal of the fourth battery 323.

The switch network SN may selectively connect the second node Nb2 to the third node Nb3 or the fourth node Nb4, and may selectively connect the third node Nb3 to the second node Nb2 or the input node Nc.

To this end, for example, the switch network SN may include a first switch Q11 disposed between the second node Nb2 and the fourth node Nb4, a second switch Q12 disposed between the second node Nb2 and the third node Nb3, and a third switch Q13 disposed between the third node Nb3 and the input node Nc. The fourth node Nb4 may be connected to a reference potential GND.

The switches Q11 to Q13 included in the switch network SN may include semiconductor switching elements such as MOSFET, IGBT, MCT, and BJT.

The buck-boost converter BBC may be disposed between the input node Nc and the system node Nsys to decrease or increase a voltage of the input node Nc and provide the decreased or increased voltage to the system node Nsys. A step-down converter such as a buck converter and a step-up converter such as a boost converter may be used for the buck-boost converter BBC.

The voltage sensor VM may measure voltages at both ends of the third battery 322 and voltages at both ends of the fourth battery 323.

The main processor 312 may obtain at least one information from among a voltage Vc1 of the third battery 322, current Ic1 of the third battery 322, a voltage Vc2 of the fourth battery 323, and current Ic2 of the fourth battery 323, and may control an operation of the switch network SN.

As such, the power management unit 313 may provide power by connecting the third battery 322 and the fourth battery 323 to the system load while switching the third battery 322 and the fourth battery 323 in series or in parallel.

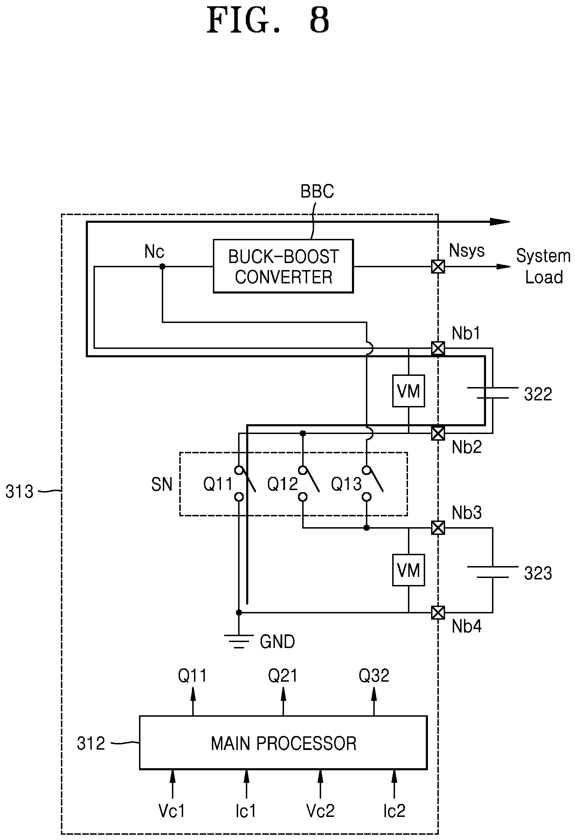

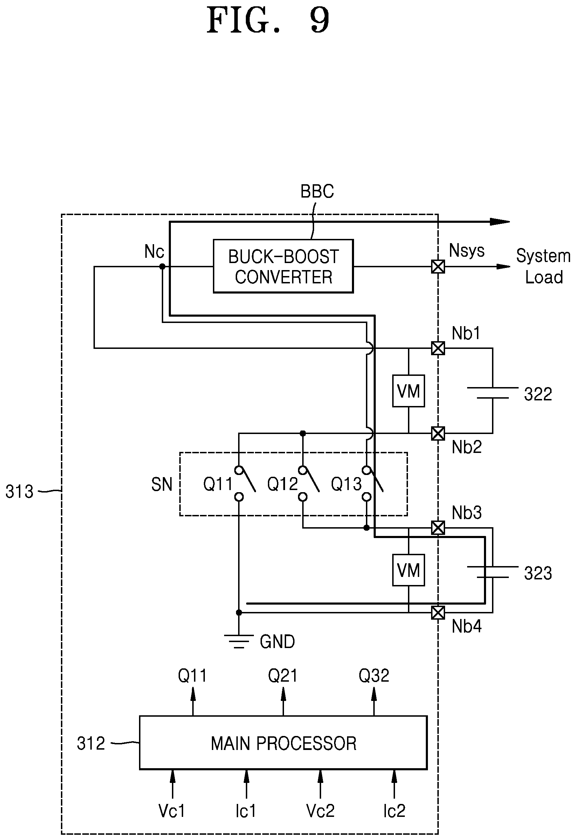

FIGS. 8 and 9 are diagrams for describing an operation of a power management unit according to an embodiment where two batteries are both connected to a main body and a difference between voltages of the two batteries is greater than or equal to a preset threshold value.

Referring to FIGS. 3 and 8, the main processor 312 may obtain information about the voltage Vc1 of the third battery 322, the current Ic1 of the third battery 322, the voltage Vc2 of the fourth battery 323, and the current Ic2 of the fourth battery 323, and when it is determined that a difference between a magnitude of a voltage of the third battery 322 and a magnitude of a voltage of the fourth battery 323 is greater than or equal to a preset threshold value, may compare the magnitude of the voltage of the third battery 322 with the magnitude of the voltage of the fourth battery 323 and may electrically connect only the third battery 322 having a larger voltage among them to the main body 310.

In detail, the main processor 312 may control an operation of the switch network SN so that only the first switch Q11 is turned on and the second switch Q12 and the third switch Q13 are turned off. The first switch Q11 may be turned on to connect the second node Nb2 and the fourth node Nb4.

Due to this switch operation, a voltage of the third battery 322 may be provided as an input voltage to an input terminal (or the input node Nc) of the buck-boost converter BBC. When the input voltage matches a preset output level, the buck-boost converter BBC may provide the input voltage itself as an output voltage to the system node Nsys. In contrast, when the input voltage does not match the preset output level, the buck-boost converter BBC may change the input voltage to the preset output level by decreasing or increasing the input voltage, and then may provide the input voltage as an output voltage to the system node Nsys. In this case, the buck-boost converter BBC may adjust an output range through a program such as I2C communication.

In contrast, referring to FIG. 9, the main processor 312 may obtain information about the voltage Vc1 of the third battery 322, the current Ic1 of the third battery 322, the voltage Vc2 of the fourth battery 323, and the current Ic2 of the fourth battery 323, and when it is determined that a difference between a magnitude of a voltage of the third battery 322 and a magnitude of a voltage of the fourth battery 323 is greater than or equal to a preset threshold value, may compare the magnitude of the voltage of the third battery 322 with the magnitude of the voltage of the fourth battery 323 and may electrically connect only the fourth battery 323 having a larger voltage among them to the main body 310.

In detail, the main processor 312 may control an operation of the switch network SN so that only the third switch Q13 is turned on and the first switch Q11 and the second switch Q12 are turned off. The third switch Q13 may be turned on to connect the third node Nb3 and the reference potential GND. Due to this switch operation, a voltage of the fourth battery 323 may be provided as an input voltage to the input terminal (or the input node Nc) of the buck-boost converter BBC.

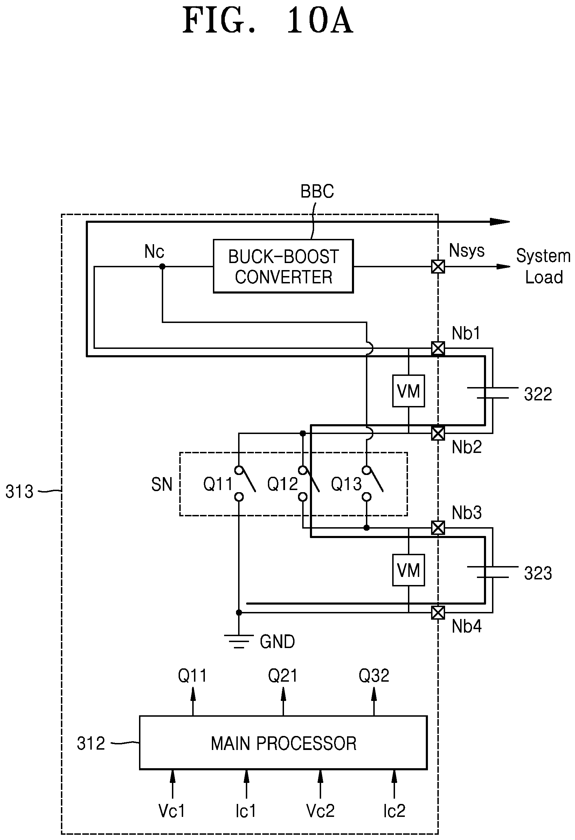

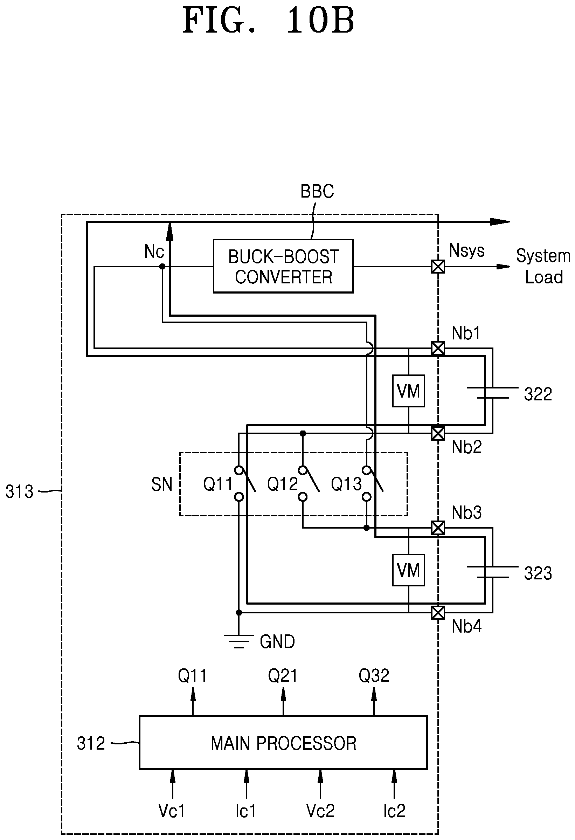

After electrically connecting only one of the third battery 322 and the fourth battery 323 to the main battery 310, the main processor 312 may periodically obtain information about the voltage Vc1 of the third battery 322, the current Ic1 of the third battery 322, the voltage Vc2 of the fourth battery 323, and the current Ic2 of the fourth battery 323, and when a difference between a magnitude of a voltage of the third battery 322 and a magnitude of a voltage of the fourth battery 323 is less than a preset threshold value, may electrically connect both the third battery 322 and the fourth battery 323 to the main body 310 as described below with reference to FIGS. 10A and 10B.

FIGS. 10A and 10B are diagrams for describing an operation of a power management unit according to an embodiment where two batteries are both connected to a main body and a difference between voltages of the two batteries is less than a preset threshold value. In this case, a coupling method (e.g., serial or parallel coupling) between the third battery 322 and the fourth battery 323 may follow preset settings or may be selected by the user's input.

Referring to FIGS. 6 and 10A, there may be an embodiment where two batteries are mounted on the main body 310 and power is provided to a system load by discharging charged power when the third battery 322 and the fourth battery 323 are connected in series.

The power management unit 313 may provide power to the system load by discharging in a state where the third battery 322 and the fourth battery 323 are connected in series. In detail, the main processor 312 may obtain information about the voltage Vc1 of the third battery 322, the current Ic1 of the third battery 322, the voltage Vc2 of the fourth battery 323, and the current Ic2 of the fourth battery 323, and when it is determined that a difference between a magnitude of a voltage of the third battery 322 and a magnitude of a voltage of the fourth battery 323 is less than a preset threshold value, may control an operation of the switch network SN so that only the second switch Q12 is turned on and the first switch Q11 and the third switch Q13 are turned off. The second switch Q12 may be turned on to connect the second node Nb2 and the third node Nb3.

Due to this switch operation, a voltage having a magnitude obtained by summing a voltage of the third battery 322 and a voltage of the fourth battery 323 may be input as an input voltage to the input terminal (or the input node Nc) of the buck-boost converter BBC. In this case, the buck-boost converter BBC may operate as a buck converter. In other words, the buck-boost converter BBC may generate an output voltage by decreasing the input voltage.

Referring to FIGS. 3 and 10, there may be an embodiment where two batteries are mounted on the main body 310 and power is provided to a system load by discharging charged power when the third battery 322 and the fourth battery 323 are connected in parallel.

The power management unit 313 may provide power to the system load by discharging in a state where the third battery 322 and the fourth battery 323 are connected in parallel. In detail, the main processor 312 may obtain information about the voltage Vc1 of the third battery 322, the current Ic1 of the third battery 322, the voltage Vc2 of the fourth battery 323, and the current Ic2 of the fourth battery 323, and when it is determined that a difference between a magnitude of a voltage of the third battery 322 and a magnitude of a voltage of the fourth battery 323 is less than a preset threshold value, may control an operation of the switch network SN so that the first switch Q11 and the third switch Q13 are turned on and the second switch Q12 is turned off. The first switch Q11 may be turned on to connect the second node Nb2 and the fourth node Nb4, and the third switch Q13 may be turned on to connect the input node Nc and the third node Nb3.

Due to this switch operation, a voltage corresponding to a magnitude of a voltage of the third battery 322 (or a voltage of the fourth battery 323) may be provided as an input voltage to the input terminal (or the input node Nc) of the buck-boost converter BBC. When the input voltage matches a preset output level, the buck-boost converter BBC may provide the input voltage itself as an output voltage to the system node Nsys. In contrast, when the input voltage does not match the preset output level, the buck-boost converter BBC may change the input voltage to the preset output level by decreasing or increasing the input voltage, and may provide the input voltage as an output voltage to the system node Nsys.

Those of ordinary skill in the art pertaining to the present embodiments can understand that various changes in form and details can be made therein without departing from the scope of the characteristics described above. The disclosed methods should be considered in descriptive sense only and not for purposes of limitation. The scope of the present disclosure is defined by the appended claims rather than by the foregoing description, and all differences within the scope of equivalents thereof should be construed as being included in the present disclosure.

## Claims

1. An aerosol-generating device comprising:
a main body comprising a first connection terminal on a bottom surface thereof; and
a battery removably coupled to the main body and comprising a first battery terminal connected to the first connection terminal on a first surface facing the bottom surface,
wherein the battery has a cross-sectional shape matching a cross-sectional shape of the main body, extends in a longitudinal direction of the main body, and forms an outer circumferential surface of the aerosol-generating device together with the main body.

2. The aerosol-generating device of claim 1, wherein the battery has any one of a cylindrical shape, an elliptical column shape, and a polygonal column shape.

3. The aerosol-generating device of claim 1, wherein, in a state where the battery is coupled to the bottom surface of the main body, remaining surfaces other than the first surface are exposed to outside.

4. The aerosol-generating device of claim 1, wherein a side surface of the battery comprises a grip portion for preventing slipping when a user holds the battery.

5. The aerosol-generating device of claim 1, wherein the main body comprises a heater for heating an aerosol generating article.

6. The aerosol-generating device of claim 1, wherein the battery is any one of a first battery having a first length and a second battery having a second length greater than the first length,
wherein the first battery has a first a first capacity, and the second battery has a second capacity greater than the first capacity.

7. The aerosol-generating device of claim 1, wherein the battery is coupled to the main body by using any one of a hook, a magnet, and a screw method.

8. The aerosol-generating device of claim 1, wherein the main body further comprises a second connection terminal located at a position different from the first connection terminal on the bottom surface.

9. The aerosol-generating device of claim 8, wherein the battery comprises a third battery comprising the first battery terminal connected to the first connection terminal and a first connecting terminal connected to the second connection terminal on one surface thereof, and a third connection terminal connected to the first connecting terminal on another surface thereof.

10. The aerosol-generating device of claim 9, wherein the battery further comprises a fourth battery coupled to the other surface of the third battery,
wherein the fourth battery comprises a second battery terminal connected to the third connection terminal on one surface thereof.

11. The aerosol-generating device of claim 10, further comprising a controller configured to, when both the third battery and the fourth battery are coupled to the main body, compare a magnitude of a voltage of the third battery with a magnitude of a voltage of the fourth battery.

12. The aerosol-generating device of claim 11, wherein the controller is further configured to, when a difference is greater than or equal to a preset threshold value, electrically connect only a battery having a larger voltage from among the third battery and the fourth battery to the main body, and
when the difference is less than the threshold value, electrically connect both the third battery and the fourth battery to the main body.

13. The aerosol-generating device of claim 12, wherein the controller is further configured to, when only one of the third battery and the fourth battery is electrically connected to the main body and then a difference between a magnitude of a voltage of the third battery and a magnitude of a voltage of the fourth battery are less than the threshold value, electrically connect both the third battery and the fourth battery to the main body.

14. The aerosol-generating device of claim 12, wherein the main body further comprises:
a voltage sensor configured to measure a voltage of each of the third battery and the fourth battery;
a switch unit configured to change a coupling method between the third battery and the fourth battery; and
a buck-boost converter configured to increase and decrease an output level.

15. The aerosol-generating device of claim 10, wherein a capacity of the third battery and a capacity of the fourth battery are same.
